# EUROPÄISCHE PATENTANMELDUNG

(11) **EP 3 121 471 A1**
(43) Veröffentlichungstag der Anmeldung: **25.01.2017**
(21) Anmeldenummer: 16174481.8
(22) Anmeldetag: 14.06.2016
(51) Int. Cl.: F16D 3/38

(54) **GELENKGABEL FÜR EIN KREUZGELENK UND KREUZGELENK**

(30) Priorität: 15.06.2015 DE 102015109546
(71) Anmelder: Spicer Gelenkwellenbau GmbH, 45143 Essen (DE)
(72) Erfinder: ERLMANN, Nikolaus Martin, 40213 Düsseldorf (DE)
(74) Vertreter: Neumann Müller Oberwalleney & Partner Patentanwälte

(57) **Zusammenfassung**

Gelenkgabel (7, 107) für ein Kreuzgelenk (2), wobei die Gelenkgabel (7, 107) um eine Drehachse (X) drehend antreibbar ist und folgendes aufweist:
einen ersten Gabelarm (11, 111) mit einer ersten Lagerbohrung (13, 113) und
einen zweiten Gabelarm (12, 112) mit einer zweiten Lagerbohrung (14, 114),
wobei die erste Lagerbohrung (13, 113) und die zweite Lagerbohrung (14, 114) auf einer Lagerachse (Y) zentriert angeordnet sind, welche die Drehachse (X) im rechten Winkel in einem Gelenkmittelpunkt (M) schneidet,
wobei die Wanddicke (d1) der Gabelarme (11, 12, 111, 112) in radialer Richtung zur Lagerachse (Y) in einer Ebene rechtwinklig zur Drehachse (X) und durch den Gelenkmittelpunkt (M) in einem radial zur Drehachse (X) äußeren Bereich der Lagerbohrungen (13, 14, 113, 114) gegenüber einem radial zur Drehachse (X) sich an den äußeren Bereich (A) anschließenden inneren Bereich (B) der Lagerbohrungen (13, 14, 113, 114) reduziert ist, wobei jeder Gabelarm (11, 12) zumindest zwei Ausnehmungen (33, 33', 34, 34') aufweist, die beidseitig der jeweiligen Lagerbohrung (13, 14) angeordnet sind und die Ausnehmungen (33, 33', 34, 34') zumindest bereichsweise parallel zur Drehachse (X) angeordnet sind.

## Beschreibung

Die Erfindung betrifft eine Gelenkgabel für ein Kreuzgelenk und ein Kreuzgelenk mit einer solchen Gelenkgabel, wobei die Gelenkgabel um eine Drehachse drehend antreibbar ist und einen ersten Gabelarm mit einer ersten Lagerbohrung und einen zweiten Gabelarm mit einer zweiten Lagerbohrung aufweist, wobei die erste Lagerbohrung und die zweite Lagerbohrung auf einer Lagerachse zentriert angeordnet sind, welche die Drehachse im rechten Winkel in einem Gelenkmittelpunkt schneidet. Die Gabelarme weisen jeweils einen radial zur Drehachse äußeren Bereich und einen sich an den äußeren Bereich anschließenden inneren Bereich auf. Die Wanddicke der Gabelarme ist in radialer Richtung zur Lagerachse in einer Ebene, die rechtwinklig zur Drehachse angeordnet ist und die durch den Gelenkmittelpunkt verläuft, im äußeren Bereich gegenüber den inneren Bereich reduziert.

Eine solche Gelenkgabel ist aus der DE 29 00 846 A1 gekannt, wobei die Gelenkgabel aus einem dünnwandigen Rohrmaterial oder Blech hergestellt ist.

Kreuzgelenke umfassen zwei Gelenkgabeln, wobei die Gabelarme der beiden Gelenkgabeln über Zapfenkreuzgarnituren gelenkig miteinander verbunden sind. Eine Zapfenkreuzgarnitur umfasst ein Zapfenkreuz mit vier von einem Grundkörper vorstehenden Zapfen, wobei jeweils zwei Zapfen paarweise auf einer gemeinsamen Lagerachse zentriert angeordnet sind. Die Zapfen sind jeweils über Lageranordnungen in den Lagerbohrungen der Gabelarme gelagert. Meist kommen Wälzlager zum Einsatz, die in Lagerbüchsen angeordnet sind, wobei die Lagerbüchsen in den Lagerbohrungen aufgenommen sind. Die Wälzkörper eines Wälzlagers rollen einerseits auf einer inneren Lagerfläche, die durch den jeweiligen Zapfen gebildet ist, und andererseits auf einer äußeren Lagerfläche, die durch die in die Lagerbohrung eingesetzte Lagerbüchse oder durch die Lagerbohrung selbst gebildet ist, ab. Bei der Übertragung von Drehmomenten von einer der beiden Gelenkgabeln zu der anderen Gelenkgabel treten Zonen höherer Belastung auf. Hierbei übernehmen steifere Teile der Gabelarme und Bereichen mit größerem Hebelarm der Drehmomentübertragung einen größeren Teil der Belastung. Diese Zonen höherer Belastung befinden sich, bezogen auf die Drehachse, radial außen, also an den Enden der Zapfen.

Die DE 103 03 291 A1 offenbart zur Erzielung einer gleichmäßigeren Lastverteilung ein Zapfenkreuz, bei dem die inneren Lagerflächen mindestens zweier auf einer gemeinsamen Zapfenachse angeordneten Zapfen jeweils entweder unmittelbar durch eine Außenumfangsfläche eines Zapfens oder durch eine Außenumfangsfläche einer auf den Zapfen aufgebrachten Hülse dargestellt sind. Die inneren Lagerflächen weisen jeweils einen ersten Lagerflächenabschnitt auf, der auf einer koaxial zur jeweiligen Zapfenachse angeordneten rotationssymmetrischen Hüllfläche angeordnet ist, und jeweils einen zweiten Lagerflächenabschnitt auf, der innerhalb der Hüllfläche angeordnet ist, der in Richtung vom Grundkörper zum jeweiligen freien Ende mit sich kontinuierlich verkleinerndem Abstand zur jeweiligen Zapfenachse verläuft und der sich über einen Teil des Umfangs des jeweiligen Zapfens erstreckt.

Da der zweite Lagerflächenabschnitt in axialer Richtung bezogen auf die jeweilige Zapfenachse mit kontinuierlich verkleinerndem Abstand zur Zapfenachse verläuft, ist in axialer Richtung eine Lastverteilung der Lagerkräfte gewährleistet. Zudem erstreckt sich der zweite Lagerflächenabschnitt lediglich über einen Teil der Außenumfangsfläche, so dass eine Reduzierung der Höchstbelastungen in der Hauptbelastungszone verwirklicht wird.

Nachteilig ist jedoch, dass die Zapfen der Zapfenkreuzgarnitur eine verhältnismäßig aufwendige Fertigung unterlaufen müssen, um die entsprechenden Lagerflächenabschnitte zu bilden.

Die DE 199 53 963 A1 offenbart eine Lösung, bei der in den zylindrischen Wandungen der Lagerbohrungen Ausnehmungen vorgesehen sind, die sich über einen Teil des Umfangs erstrecken und in axialer Richtung einer Zapfenachse eine veränderliche Tiefe aufweisen. Die Zapfen des Zapfenkreuzes sind in einer Lagerbüchse wälzgelagert, wobei die Lagerbüchse in der Lagerbohrung aufgenommen ist. Somit wird im Bereich der Ausnehmungen, die sich im Bereich der Hauptlastzonen befinden, eine Verformung der Lagerbüchse ermöglicht, so dass die maximalen Belastungen reduziert werden.

Die DE 1 425 952 A1 zeigt zur Reduzierung von maximalen Belastungen in einem Wälzlager eine im Querschnitt oval geformte Welle, die in einem Ring wälzgelagert ist. Im Bereich der Hauptlastzone weist die Welle den größten Krümmungsradius auf, so dass die Lagerlast auf mehr Wälzkörper verteilt wird, als bei einer Ausführungsform, in der die Welle im Querschnitt kreisrund ausgebildet ist. Der Nachteil besteht jedoch darin, dass in axialer Richtung der Welle keine Lagerlastverteilung erzielt wird.

Die DE 29 33 505 A1 zeigt eine Zapfenkreuzgarnitur, bei der die Zapfen in Lagerbüchsen wälzgelagert sind. Die Lagerbüchsen sind in Lagerbohrungen der Gelenkgabeln aufgenommen. Die Außenumfangsflächen der Lagerbüchsen sind im Wesentlichen zylindrisch und weisen im Bereich der Hauptlastzonen Abflachungen auf, die sich über einen Teil des Umfangs erstrecken und die sich in Richtung der Zapfenachse, ausgehend von einem Grundkörper, an dem die Zapfen angeformt sind, in Richtung zu dem jeweiligen freien Ende des Zapfens der Zapfenachse annähern.

Zur Lagerlastverteilung in axialer Richtung bezogen auf die Zapfenachsen zeigt die DE 1 122 781 B ein Zapfenkreuz mit Zapfen, deren Außenumfangsfläche konisch ausgebildet ist. Hierbei ist jedoch keine Lagerlastverteilung in Umfangsrichtung möglich. Zudem sind die Wälzkörper bei geringer Belastung nicht über ihre gesamte Längserstreckung in Anlage zur Lagerfläche der Lagerbohrung.

Aufgabe der vorliegenden Erfindung ist es, eine Gelenkgabel für ein Kreuzgelenk mit erhöhter Lebensdauer bereit zu stellen.

Die Aufgabe wird durch eine Gelenkgabel mit den Merkmalen des Anspruchs 1 gelöst. Bevorzugte Ausführungsbeispiele ergeben sich aus den Unteransprüchen.

Durch die Reduzierung der Wanddicke der Gabelarme in den, bezogen auf die Drehachse, äußeren Bereichen entlang der Lagerbohrungen entsteht eine Entlastung der Lagerung von Zapfen eines Zapfenkreuzes in diesen äußeren Bereichen, da der Gabelarm in den Bereichen reduzierter Wanddicke geschwächt ist und entsprechend mehr nachgeben kann. Die Hertz'sche Pressung der äußeren Bereiche wird verringert, wodurch die Lebensdauer der Lagerung der Gelenkgabel überproportional ansteigt. Die, bezogen auf die Drehachse, inneren Bereiche entlang der Lagerbohrungen werden hingegen höher belastet. Da diese inneren Bereiche jedoch geringer belastet sind als die äußeren Bereiche, findet eine Vergleichmäßigung der Belastung in Richtung der Lagerachse statt, was ebenfalls zur Verbesserung der Lebensdauer führt.

Je Gabelarm sind zwei Ausnehmungen vorgesehen, die auf beiden Seiten der jeweiligen Lagerbohrung angeordnet sind und parallel zueinander und zur Drehachse verlaufen. Die Ausnehmungen sind im Sinne dieser Erfindung auch dann als parallel zur Drehachse oder parallel zueinander anzusehen, wenn diese zur Möglichkeit der Fertigung im Wege eines Schmiedeprozesses geringfügig schräg angeordnet sind, also leicht winklig zur Drehachse und zueinander angeordnet sind. Eine Winkelabweichung zur Drehachse von bis zu 10 Grad ist daher noch als parallel im Sinne der Erfindung anzusehen. Dies entspricht in etwa üblichen Schmiedeschrägen.

Vorzugsweise ist die Wanddicke ausgehend von der Ebene, die rechtwinklig zur Drehachse angeordnet ist und durch den Gelenkmittelpunkt verläuft, mindestens in einem Winkelbereich von +/- 45 Grad um die Lagerachse reduziert.

Gemäß einer bevorzugten Ausführungsform ist die Wanddicke in einem radial zur Drehachse äußeren Bereich entlang der Lagerbohrungen an freien Enden der Gabelarme nicht reduziert. Anders ausgedrückt kann vorgesehen sein, dass die Wanddicke der Gabelarme in radialer Richtung zur Lagerachse in der Ebene, die rechtwinklig zur Drehachse angeordnet ist und die durch den Gelenkmittelpunkt verläuft, in dem radial zur Drehachse äußeren Bereich gegenüber einem radial zur Drehachse weiteren äußeren Bereich im Bereich von freien Enden der Gabelarme in einer Ebene, die die Drehachse und die Lagerachse beinhaltet, reduziert ist.

Die äußeren Bereiche entlang der Lagerbohrungen gehen jeweils von einem, bezogen auf die Drehachse, äußeren Ende der Lagerbohrungen aus und verlaufen über einen Teil der Längserstreckungen der Lagerbohrungen in Richtung auf die Drehachse zu. Hieran schließen sich jeweils die inneren Bereiche unmittelbar an, wobei diese nicht zwingend bis zu den inneren Enden der Lagerbohrungen reichen müssen. Es ist daher möglich, dass sich ein ganz innen liegender Bereich je Lagerbohrung anschließt, in dessen Bereich die Wanddicke wiederum gegenüber dem inneren Bereich reduziert sein kann.

Die Wanddicke der Gabelarme kann über einen Großteil des Umfangs um die Lagerbohrung reduziert sein, also über mehr als die Hälfte des Umfangs um die Lagerbohrungen, wobei die reduzierten Bereiche auf mindestens zwei Umfangsbereiche aufgeteilt sein können.

In einer Ausgestaltung ist vorgesehen, dass die Gabelarme bezogen auf die Drehachse außen Ausnehmungen aufweisen, die sich über die Längserstreckung der äußeren Bereiche der Lagerbohrungen erstrecken, wodurch die Wanddicke reduziert wird. Die Ausnehmungen sind, bezogen auf die Drehachse, in äußeren Oberflächen der Gabelarme vorgesehen.
Die Gelenkgabel kann einen Basisabschnitt aufweisen, von dem die Gabelarme parallel zueinander vorstehen. Die Gelenkgabel weist vorzugsweise jeweils zwischen der Lagerachse und dem Basisabschnitt eine Ausnehmung auf, die zumindest teilweise um die Lagerachse verläuft, um die Wanddicke zu reduzieren.

Die Erfindung wird einmal durch ein Kreuzgelenk mit einer vorangehend beschriebenen Gelenkgabel gelöst, wobei die Gelenkgabel über ein Zapfenkreuz mit einer weiteren Gelenkgabel gelenkig verbunden ist. Hierbei kann auch die weitere Gelenkgabel eine Gelenkgabel wie vorangehend beschrieben sein.

Die Wanddicke der Gabelarme ist im äußeren Bereich an freien Enden der Gabelarme nicht reduziert, bzw. es sind dort keine Ausnehmung vorgesehen.

Bevorzugte Ausführungsbeispiele werden nachstehend anhand der Zeichnungen näher erläutert. Hierin zeigt
- Figur 1: einen Halblängsschnitt einer Kreuzgelenkwelle,
- Figur 2: einen Halblängsschnitt einer ersten Ausführungsform einer erfindungsgemäßen Gelenkgabel,
- Figur 3: einen Teilquerschnitt der Gelenkgabel gemäß Figur 2,
- Figur 4: eine Seitenansicht der Gelenkgabel gemäß Figur 2,
- Figur 5: einen Teillängsschnitt einer zweiten Ausführungsform einer erfindungsgemäßen Gelenkgabel,
- Figur 6: einen Teilquerschnitt der Gelenkgabel gemäß Figur 5,
- Figur 7: eine Seitenansicht der Gelenkgabel gemäß Figur 5,
- Figur 8: einen Querschnitt durch den Gabelarm einer Gelenkgabel in zwei Ausführungen, wobei die obere Hälfte eine Gelenkgabel nach dem Stand der Technik zeigt und die untere Hälfte eine Gelenkgabel gemäß Figur 2,
- Figur 9: einen Halblängsschnitt einer dritten Ausführungsform einer Gelenkgabel gemäß Figur 2 als Schmiedeteil,
- Figur 10: einen Teilquerschnitt der Gelenkgabel gemäß Figur 9,
- Figur 11: einen Halblängsschnitt einer vierten Ausführungsform einer Gelenkgabel gemäß Figur 5 als Schmiedeteil,
- Figur 12: einen Teilquerschnitt der Gelenkgabel gemäß Figur 11,
- Figur 13: einen Halblängsschnitt einer fünften Ausführungsform einer Gelenkgabel,
- Figur 14: einen Teilquerschnitt der Gelenkgabel gemäß Figur 13.

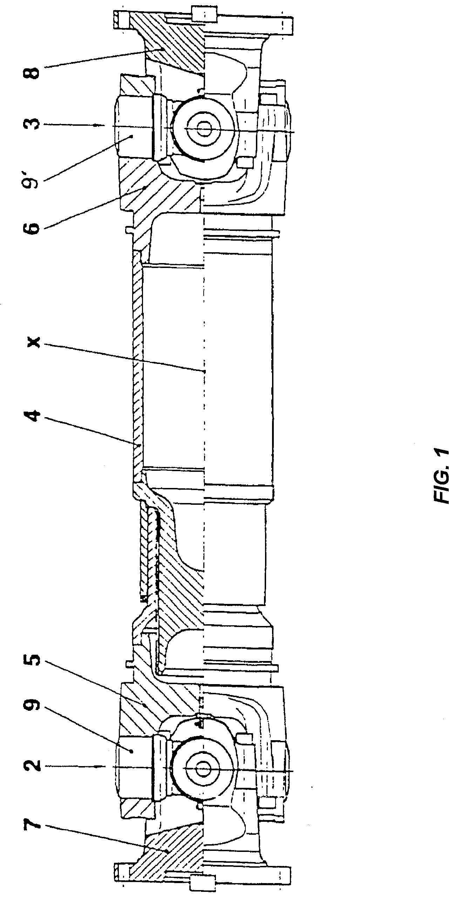

Figur 1 zeigt eine Kreuzgelenkwelle 1, welche zwei Kreuzgelenke 2, 3 sowie eine die beiden Kreuzgelenke 2, 3 verbindende und eine Veränderung des Abstands zwischen diesen zulassende Welle 4 besitzt. Die beiden Kreuzgelenke 2, 3 sind auf einer Drehachse X zentriert ausgerichtet. Jedes von ihnen umfasst eine innere erste Gelenkgabel 5, 6 in Form eines sogenannten Zapfenmitnehmers, die jeweils mit der Welle 4 fest verbunden ist, und eine äußere zweite Gelenkgabel 7, 8 in Form eines sogenannten Flanschmitnehmers, die ebenfalls jeweils mit der Welle 4 fest verbunden ist, sowie eine Zapfenkreuzgarnitur 9, 9', mittels derer die erste Gelenkgabel 5, 6 und die zweite Gelenkgabel 7, 8 schwenkbar miteinander verbunden sind.

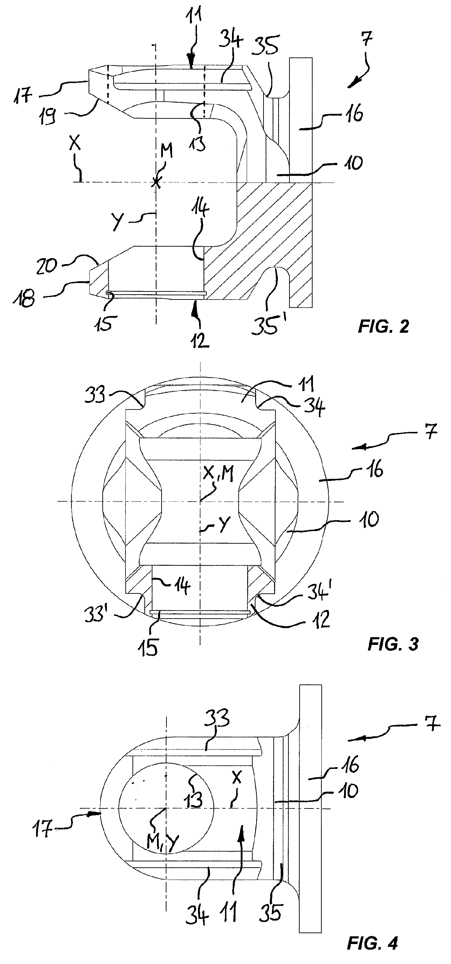

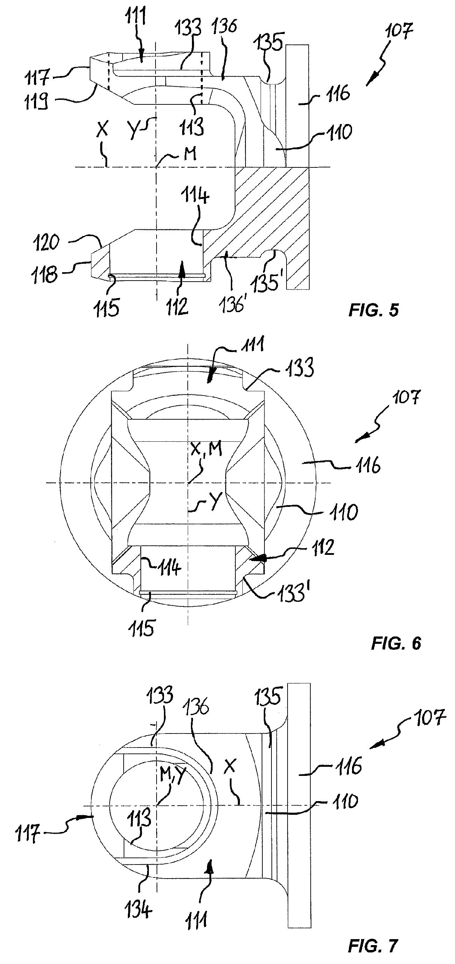

Die Kreuzgelenkwelle gemäß Figur 1 ist als schematische Zeichnung zu sehen und weist zumindest eine Gelenkgabel auf, die der folgenden ersten Ausführungsform gemäß der Figuren 2, 3 und 4 oder der folgenden zweiten Ausführungsform gemäß der Figuren 5, 6 und 7 entspricht. Eine Kreuzgelenkwelle kann auch mehrere Gelenkgabeln nach einer beliebigen der nachfolgenden Ausführungsformen aufweisen. Die folgenden zwei Ausführungsformen der Gelenkgabeln sind als Flanschmitnehmer ausgebildet, so dass diese als äußere zweite Gelenkgabeln 7, 8 dienen können. Im Folgenden wird rein exemplarisch davon ausgegangen, dass die zweite Gelenkgabel des links dargestellten Kreuzgelenks durch eine der folgenden Ausführungsformen repräsentiert wird. Selbstverständlich können auch beide äußeren oder nur die rechte äußere Gelenkgabel gestaltet sein, wie nachfolgend erläutert. Die Gelenkgabeln der folgenden Ausführungsformen können auch als Zapfenmitnehmer, also erste Gelenkgabeln gestaltet sein, wobei diese ebenfalls in beliebiger Kombination eine der folgenden Ausführungsformen umfassen kann.

Die Figuren 2 bis 4 zeigen eine erste Ausführungsform einer zweiten Gelenkgabel 7 in unterschiedlichen Ansichten. Die Figur 2 zeigt einen Teillängsschnitt, die Figur 3 einen Teilquerschnitt und die Figur 4 eine Seitenansicht der zweiten Gelenkgabel 7. Die zweite Gelenkgabel 7 ist um die Drehachse X drehbar und weist einen Basisabschnitt 10 auf, von dem ein erster Gabelarm 11 und ein zweiter Gabelarm 12 parallel zueinander und parallel zur Drehachse X vorstehen. In dem ersten Gabelarm 11 ist eine erste Lagerbohrung 13 und in dem zweiten Gabelarm 12 eine zweite Lagerbohrung 14 vorgesehen. Die beiden Lagerbohrungen 13, 14 sind auf einer gemeinsamen Lagerachse Y zentriert angeordnet und fluchten somit miteinander. Die Lagerachse Y ist im rechten Winkel zur Drehachse X angeordnet und schneidet diese in einem Gelenkmittelpunkt M. Die erste Lagerbohrung 13 und die zweite Lagerbohrung 14 sind als Durchgangsbohrungen gestaltet und verlaufen somit, bezogen auf die Drehachse X, in radialer Richtung durch die jeweiligen Gabelarme 11, 12. In die Gabelarme wird, wie nahfolgend noch erläutert wird, eine Lagerbüchse 21 zur Lagerung eines Zapfens eines Zapfenkreuzes eingesetzt, wobei die Lagerbüchse 21 durch einen Sicherungsring gesichert ist, der in einer um die Lagerachse Y umlaufende Sicherungsnut 15 sitzt.

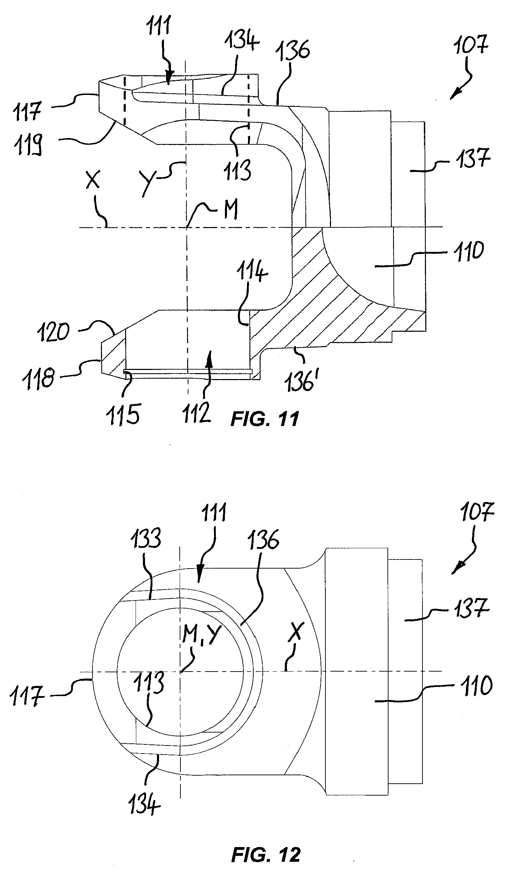

Auf einer von den Gabelarmen 11, 12 abgewandten Seite weist der Basisabschnitt 10 einen Flansch 16 auf, mit dem die zweite Gelenkgabel 7 mit einem anzutreibenden oder antreibenden Bauteil verbunden werden kann. Grundsätzlich kann anstelle eines Flansches auch ein Zapfen vorgesehen sein, der mit einem Wellenbauteil einer Welle gemäß Figur 1 verbunden werden kann. Ausführungsformen mit Zapfen zeigen zum Beispiel die Figuren 11 bis 14. Die dort gezeigten Zapfen können in dieser oder ähnlicher Form auch bei den anderen Ausführungsformen vorgesehen sein.

Um ein Zapfenkreuz montieren zu können, wobei das Zapfenkreuz 4 von einem Basiskörper vorstehende Zapfen aufweist, die paarweise zentriert zueinander angeordnet sind und in entgegengesetzter Richtung ausgerichtet sind, weist der erste Gabelarm 11 an einem ersten freien Ende 17 eine nach innen weisende erste Montageausnehmung 19 auf. Der zweite Gabelarm 12 weist eine an einem zweiten freien Ende 18 angeordnete nach innen weisende zweite Montageausnehmung 20 auf. Die beiden Gabelarme 11, 12 sind somit zu einer Ebene, die senkrecht zur Lagerachse Y angeordnet ist und die Drehachse X beinhaltet, spiegelsymmetrisch ausgebildet. Die Montageausnehmungen 19, 20 ermöglichen nun das Einfädeln eines Zapfenkreuzes in die Lagerbohrungen 13, 14, wobei ein Zapfen des Zapfenkreuzes zunächst schräg durch die erste Montageausnehmung 19 hindurchgeführt wird und dann in die erste Lagerbohrung 13 eingeführt wird. Der Zapfen wird so tief in die erste Lagerbohrung 13 eingeführt, dass der gegenüberliegende Zapfen durch die zweite Montageausnehmung 20 hindurchgeführt werden kann bis der gegenüberliegende Zapfen durch Verlagern des gesamten Zapfenkreuzes in die zweite Lagerbohrung 14 eingeschoben werden kann. Sodann können die Lagerbuchsen von außen in die Lagerbohrungen 13, 14 eingesetzt werden und mit einem Sicherungsring, der in die Sicherungsnut 15 eingesetzt wird, gesichert werden.

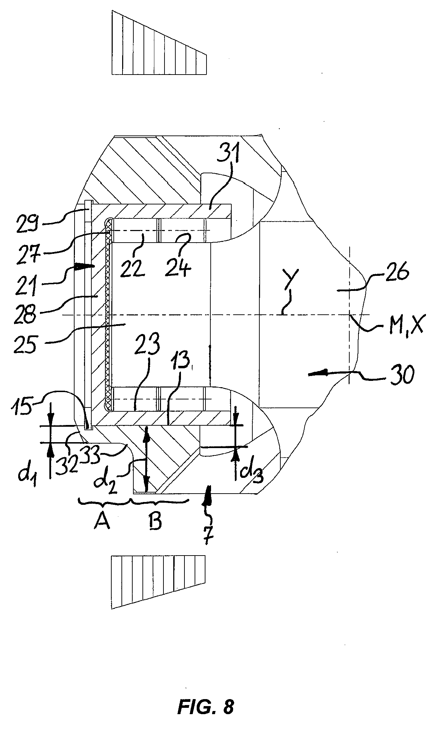

Figur 8 zeigt einen Querschnitt durch einen ersten Gabelarm 11, wobei der in Figur 8 dargestellte untere Teil der zweiten Gelenkgabel 7 gemäß der Figuren 2 bis 4 entspricht. Der obere oberhalb der Lagerachse Y dargestellte Teil entspricht einer herkömmlichen Gelenkgabel nach dem Stand der Technik.

Figur 8 zeigt den ersten Gabelarm 11 mit der ersten Lagerbohrung 13. In diese ist eine Lagerbüchse 21 eingesetzt. Die Lagerbüchse 21 nimmt mehrere Wälzkörper in Form von Rollen 22 auf, die zentrisch zur Drehachse X angeordnet sind und entlang der Lagerachse Y in zwei Reihen vorgesehen sind. Die Rollen 22 rollen einerseits auf einer äußeren Lagerfläche 23 der Lagerbüchse 21 ab. Andererseits rollen die Rollen 22 auf einer inneren Lagerfläche 24 eines Zapfens 25 eines Zapfenkreuzes 30 ab. Das Zapfenkreuz 30 weist einen Basiskörper 26 auf, von dem vier Zapfen 25 abstehen, wobei zwei Zapfen jeweils paarweise auf einer Lagerachse Y zentriert sind und voneinander weg gerichtet sind.

Die Lagerbüchse 21 weist eine Büchsenwand 31 auf, die zylindrisch gestaltet ist und mit der die Lagerbüchse 21 in die erste Lagerbohrung 13 eingesetzt ist. Die Innenfläche der Büchsenwand 31 bildet die äußere Lagerfläche 23. Darüber hinaus weist die Lagerbüchse 21 einen Büchsenboden 28 auf, der die Lagerbüchse 21, bezogen auf den Gelenkmittelpunkt M, außen abschließt. Die Lagerbüchse 21 stützt sich über den Büchsenboden 28 gegen einen Sicherungsring 29 ab, der in der Sicherungsnut 15 sitzt.

In der Lagerbüchse 21 laufen die Rollen 22 gegen eine Druckscheibe 27 axial bezogen auf die Lagerachse Y an, wobei die Druckscheibe 27 gegen den Büchsenboden 28 abgestützt ist. In die andere Richtung sind die Rollen 22 durch einen hier nicht dargestellten Ring, der an der Büchsenwand 31 befestigt ist, abgestützt und in der Lagerbüchse 21 gehalten. An diesem Ring sind üblicherweise auch Dichtmittel vorgesehen, um die Lagerbüchse 21 in Richtung zum Basiskörper 26 gegenüber dem Zapfenkreuz 30 abzudichten. Aus Gründen der Übersichtlichkeit wurden hier weder der Ring noch die Dichtmittel dargestellt.

Der Zapfen, der dem dargestellten Zapfen 25, bezogen auf den Basiskörper 26, abgewandt angeordnet ist, ist entsprechend im zweiten Gabelarm gelagert. Die senkrecht zu der Lagerachse Y angeordneten Zapfen, die ebenfalls nicht dargestellt sind, sind in entsprechenden Lagerbohrungen einer ersten Gelenkgabel gelagert. Somit kann Drehmoment zwischen der zweiten Gelenkgabel 7 und einer ersten Gelenkgabel übertragen werden, so dass sich die Kreuzgelenkwelle und das Kreuzgelenk um die Drehachse X dreht. Hierbei treten Kräfte in der Zeichnungsebene gemäß Figur 8 auf, die, sofern die erste Gelenkgabel das antreibende Element ist, vom Zapfen 25 auf den ersten Gabelarm 11 wirken und über die Lagerung, also die Lagerflächen 23, 24 und Rollen 22, übertragen werden. Die Lagerlast der in der unteren Hälfte dargestellten Ausführungsform der zweiten Gelenkgabel 7 ist unterhalb der Darstellung der Gelenkgabel in Form eines Trapezes dargestellt. Die Lagerlast einer Gelenkgabel nach dem Stand der Technik ist in Figur 8 oberhalb der Ausführungsform der Gelenkgabel nach der oberen dargestellten Hälfte als Trapez dargestellt.

Zunächst ist zu erkennen, dass die Lagerlast, bezogen auf die Drehachse X, radial außen am höchsten ist, da hier auch der Hebelarm zur Kraftübertragung am größten ist. Die Lagerlast nimmt nach innen hin ab. Nach dem Stand der Technik ist zu erkennen, dass die Lagerlast radial außen signifikant größer ist als die Lagerlast radial innen.

Zur Vergleichmäßigung der Lagerlast ist nach der Ausführungsform in der unteren dargestellten Hälfte gemäß Figur 8 in die äußere Oberfläche 32 des ersten Gabelarms 11 eine erste Ausnehmung 33 vorgesehen. In Figur 4 ist ersichtlich, dass die erste Ausnehmung 33, bezogen auf die Drehachse X, auf einer Seite der ersten Lagerbohrung 13 angeordnet ist und parallel zur Drehachse X verläuft. Ferner ist eine zweite Ausnehmung 34 vorgesehen, die auf der anderen Seite der ersten Lagerbohrung 13 vorgesehen ist und ebenfalls parallel zur Drehachse X verläuft. Die Ausnehmungen 33, 34 verlaufen bis zu einer dritten Ausnehmung 35, die teilweise um die Drehachse X verläuft und im Basiskörper 10 vorgesehen ist, zwischen dem ersten Gabelarm 11 und dem Flansch 16.

Durch die erste Ausnehmung 33 und die zweite Ausnehmung 34 ist die Wanddicke d1 im Querschnitt senkrecht zur Drehachse X, also in einer Ebene rechtwinklig zur Drehachse X und durch den Gelenkmittelpunkt M, wobei diese Ebene der Bildebene gemäß Figur 8 entspricht, im Bereich der Ausnehmung 33, 34 des ersten Gabelarms 11 geringer als eine maximale Wanddicke d2 in demjenigen Bereich, der sich, bezogen auf die Drehachse X, nach innen an die Ausnehmungen 33, 34 anschließen. Der Bereich der Ausnehmungen 33, 34 entspricht hierbei einem, bezogen auf die Drehachse X, äußeren Bereich A entlang der Lagerbohrung. Hieran schließt sich ein innerer Bereich B entlang der Lagerbohrung 13 an.

Die Wanddicke d1 im äußeren Bereich A im Bereich der Ausnehmung 33, 34 ist sogar im vorliegenden bevorzugten Beispiel geringer als die maximale Wanddicke des übrigen inneren Bereichs B, der sich nach innen hin an die Ausnehmung 33, 34 anschließen und die mit den Rollen axial, bezogen auf die Lagerachse Y, in Überdeckung liegen.

Somit wird der erste Gabelarm 11 im Bereich der Ausnehmung 33, 34 geschwächt, so dass in diesem Bereich eine höhere elastische Verformung des ersten Gabelarms 11 stattfinden kann und die Lagerlasten in diesem Bereich reduziert werden. Entsprechend müssen die inneren Bereiche des ersten Gabelarms 11 höhere Lasten übernehmen, so dass hier die Lagerlast erhöht wird. Dies zeigt sich in dem nicht ganz so steilen Trapez, welches die Lagerlast widerspiegelt, in der unteren Hälfte der Darstellung gemäß Figur 8. Die höchste auftretende Lagerlast ist somit geringer und die geringste Lagerlast höher als gegenüber dem Stand der Technik. Hierdurch ergibt sich eine erhöhte Lebensdauer der Lagerung des Zapfens 25 im ersten Gabelarm 11.

Wie in Figur 4 ersichtlich, erstrecken sich die erste Ausnehmung 33 und zweite Ausnehmung 34 in Richtung zum Flansch 16 bzw. zum Basisabschnitt 10 mindestens so weit, wie sich die erste Lagerbohrung 13 in Richtung der Drehachse X und in Seitenansicht gemäß Figur 4 erstreckt. Im vorliegenden Beispiel sogar noch weiter als die Erstreckung der ersten Lagerbohrung 13.

Die Figuren 5 bis 7 zeigen eine zweite Ausführungsform einer zweiten Gelenkgabel. Bauteile bzw. Merkmale, die mit Bauteilen oder Merkmalen der ersten Ausführungsform übereinstimmen, sind mit Bezugszeichen versehen, die um den Wert 100 erhöht sind und im Zusammenhang mit der ersten Ausführungsform beschrieben.

Im Unterschied zur ersten Ausführungsform sind die zwei Ausnehmungen 133, 134 durch eine dritte Ausnehmung 136, 136' miteinander verbunden. Die dritte Ausnehmung 136, 136' verläuft zwischen der Lagerachse Y und dem Basisabschnitt 10 teilweise um die Lagerachse Y und damit um die jeweilige Lagerbohrung 113,114 herum. Da die beiden Gabelarme 111, 112 spiegelsymmetrisch zueinander angeordnet sind, wird im Folgenden repräsentativ auf den ersten Gabelarm 111 Bezug genommen. Die erste Ausnehmung 133 verläuft vom ersten freien Ende 117 des ersten Gabelarms 111 in Richtung zum Basisabschnitt 110, geht dann in Umfangsrichtung in die dritte Ausnehmung 136 über, die um die erste Lagerbohrung 113 herum verläuft. Die dritte Ausnehmung 136 geht in die zweite Ausnehmung 134 über, die wieder zum ersten freien Ende 117 führt. Somit ist die Wanddicke nicht nur in einer Querschnittsebene senkrecht zur Drehachse X reduziert, sondern auch im vollständigen Bereich zwischen einer Ebene, die senkrecht zur Drehachse X angeordnet ist und die Lagerachse Y enthält, und dem Basisabschnitt 110.

Bei allen Ausführungsformen ist vorgesehen, dass die Wanddicke der Gabelarme im äußeren Bereich entlang der Lagerbohrungen an den freien Enden der Gabelarme nicht reduziert ist, bzw. keine Ausnehmung in diesem Bereich vorgesehen ist.

Diese Art der Gestaltung der Ausnehmung 133 ist besonders vorteilhaft, wenn die zweite Gelenkgabel 107 als Schmiedeteil gestaltet ist, wobei die Schmiederichtung parallel zur Lagerachse Y verläuft.

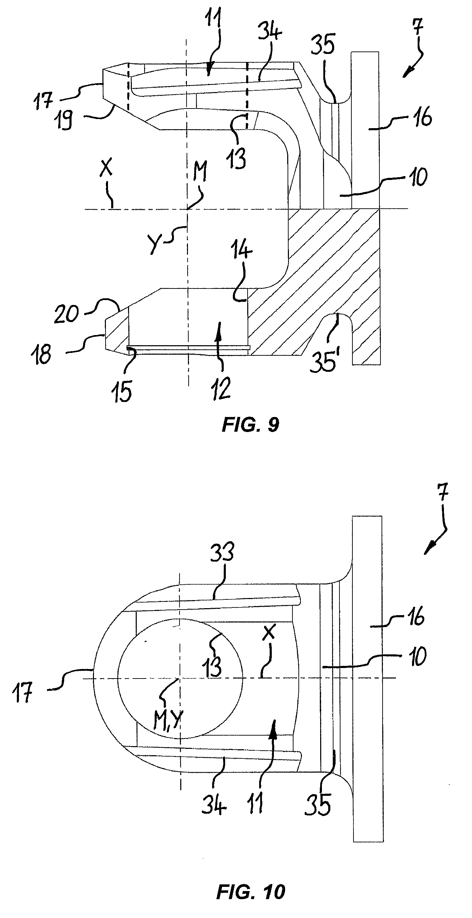

Die Figuren 9 und 10 zeigen eine dritte Ausführungsform einer zweiten Gelenkgabel, wobei diese als Schmiedeteil gestaltet ist. Bauteile bzw. Merkmale, die mit Bauteilen oder Merkmalen der ersten Ausführungsform übereinstimmen, sind mit denselben Bezugszeichen versehen und im Zusammenhang mit der ersten Ausführungsform beschrieben.

Die Ausnehmungen 33, 34 sind schräg zur Drehachse X angeordnet. Sie sind auf einer gedachten Kegelmantelfläche um die Drehachse X angeordnet, wobei sich die Kegelmantelfläche zum Flansch 16 hin verjüngt. Die Anordnung der ersten und zweiten Ausnehmungen 33, 34 annähernd parallel zur Drehachse eignet sich besonders für Gelenkgabeln, die als Schmiedeteil hergestellt sind, wobei die Schmiederichtung parallel zur Drehachse X verläuft.

Die Figuren 11 und 12 zeigen eine vierte Ausführungsform einer zweiten Gelenkgabel, wobei diese als Schmiedeteil gestaltet ist. Bauteile bzw. Merkmale, die mit Bauteilen oder Merkmalen der zweiten Ausführungsform übereinstimmen, sind mit denselben Bezugszeichen versehen und im Zusammenhang mit der zweiten Ausführungsform beschrieben.

Die Ausnehmungen 133, 134 sind schräg zur Drehachse X angeordnet. Sie sind auf einer gedachten Kegelmantelfläche um die Drehachse X angeordnet, wobei sich die Kegelmantelfläche zum Zapfen 116 hin verjüngt. Die Anordnung der ersten und zweiten Ausnehmungen 133, 134 annähernd parallel zur Drehachse eignet sich besonders für Gelenkgabeln, die als Schmiedeteil hergestellt sind, wobei die Schmiederichtung parallel zur Drehachse X verläuft.

Zudem weist die zweite Gelenkgabel 107 keinen Flansch, sondern einen Zapfen 137 zum Verbinden mit einem Element einer Welle auf.

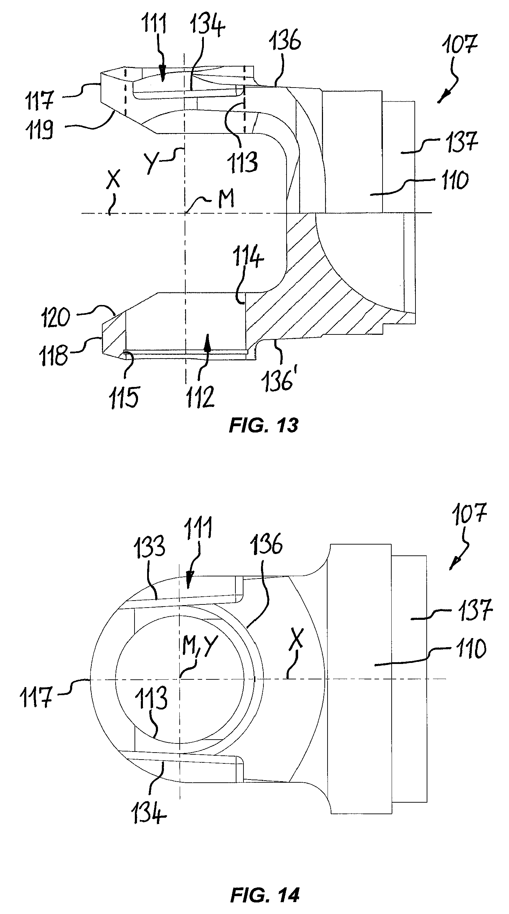

Die Figuren 13 und 14 zeigen eine fünfte Ausführungsform einer zweiten Gelenkgabel, wobei diese als Schmiedeteil gestaltet ist. Bauteile bzw. Merkmale, die mit Bauteilen oder Merkmalen der vierten Ausführungsform übereinstimmen, sind mit denselben Bezugszeichen versehen und im Zusammenhang mit der vierten bzw. der zweiten Ausführungsform beschrieben.

Die ersten, zweiten und dritten Ausnehmungen 133, 134, 136 sind derart angeordnet, dass sie sich besonders bei einem Schmiedeteil eignen, bei dem die Schmiederichtung quer zur Drehachse X verläuft.

### Bezugszeichenliste

- 1: Kreuzgelenkwelle
- 2: Kreuzgelenk
- 3: Kreuzgelenk
- 4: Welle
- 5: erste Gelenkgabel
- 6: erste Gelenkgabel
- 7, 107: zweite Gelenkgabel
- 8: zweite Gelenkgabel
- 9, 9': Zapfenkreuzgarnitur
- 10, 110: Basisabschnitt
- 11, 111: erster Gabelarm
- 12, 112: zweiter Gabelarm
- 13, 113: erste Lagerbohrung
- 14, 114: zweite Lagerbohrung
- 15, 115: Sicherungsnut
- 16, 116: Flansch
- 17, 117: erstes freies Ende
- 18, 118: zweites freies Ende
- 19, 119: erste Montageausnehmung
- 20, 120: zweite Montageausnehmung
- 21: Lagerbüchse
- 22: Rolle
- 23: äußere Lagerfläche
- 24: innere Lagerfläche
- 25: Zapfen
- 26: Basiskörper
- 27: Druckscheibe
- 28: Büchsenboden
- 29: Sicherungsring
- 30: Zapfenkreuz
- 31: Büchsenwand
- 32: Oberfläche
- 33, 33', 133, 133': erste Ausnehmung
- 34, 34': zweite Ausnehmung
- 35, 35', 135, 135': Ausnehmung
- 136, 136': dritte Ausnehmung
- 137: Zapfen

- A: äußerer Bereich
- B: innerer Bereich
- M: Gelenkmittelpunkt
- X: Drehachse
- Y: Lagerachse

## Patentansprüche

1. Gelenkgabel (7, 107) für ein Kreuzgelenk (2), wobei die Gelenkgabel (7, 107) um eine Drehachse (X) drehend antreibbar ist und folgendes aufweist:
einen ersten Gabelarm (11, 111) mit einer ersten Lagerbohrung (13, 113) und
einen zweiten Gabelarm (12, 112) mit einer zweiten Lagerbohrung (14, 114),
wobei die erste Lagerbohrung (13, 113) und die zweite Lagerbohrung (14, 114) auf einer Lagerachse (Y) zentriert angeordnet sind, welche die Drehachse (X) im rechten Winkel in einem Gelenkmittelpunkt (M) schneidet,
wobei die Gabelarme (11, 12, 111, 112) jeweils einen radial zur Drehachse (X) äußeren Bereich (A) und einen sich an den äußeren Bereich (A) anschließenden inneren Bereich (B) aufweisen, und
wobei die Wanddicke (d1) der Gabelarme (11, 12, 111, 112) in radialer Richtung zur Lagerachse (Y) in einer Ebene, die rechtwinklig zur Drehachse (X) angeordnet ist und die durch den Gelenkmittelpunkt (M) verläuft, im äußeren Bereich (A) gegenüber den inneren Bereich (B) reduziert ist,
**dadurch gekennzeichnet,**
**dass** jeder Gabelarm (11, 12) zumindest zwei Ausnehmungen (33, 33', 34, 34') aufweist, die beidseitig der jeweiligen Lagerbohrung (13, 14) angeordnet sind und
**dass** die Ausnehmungen (33, 33', 34, 34') zumindest bereichsweise parallel zur Drehachse (X) angeordnet sind.

2. Gelenkgabel nach Anspruch 1,
**dadurch gekennzeichnet,**
**dass** die Wanddicke (d1) der Gabelarme (11, 12, 111, 112) in radialer Richtung zur Lagerachse (Y) in der Ebene, die rechtwinklig zur Drehachse (X) angeordnet ist und die durch den Gelenkmittelpunkt (M) verläuft, in dem radial zur Drehachse (X) äußeren Bereich (A) gegenüber einem radial zur Drehachse (X) äußeren Bereich im Bereich von freien Enden der Gabelarme (11, 12, 111, 112) in einer Ebene, die die Drehachse (X) und die Lagerachse (Y) beinhaltet, reduziert ist.

3. Gelenkgabel nach einem der vorangehenden Ansprüche,
**dadurch gekennzeichnet,**
**dass** die äußeren Bereiche (A) jeweils von einem, bezogen auf die Drehachse (X), äußeren Ende der Lagerbohrungen (13, 14, 113, 114) ausgehen.

4. Gelenkgabel nach einem der vorangehenden Ansprüche,
**dadurch gekennzeichnet,**
**dass** die Wanddicke (d1) der Gabelarme (11, 12, 111, 112) über einen Großteil des Umfangs um die Lagerbohrungen (13, 14, 113, 114) reduziert ist.

5. Gelenkgabel nach einem der vorangehenden Ansprüche,
**dadurch gekennzeichnet,**
**dass** die Gabelarme (11, 12, 111, 112) bezogen auf die Drehachse (X) außen Ausnehmungen (33, 33', 34, 34',133, 133', 134, 134', 136, 136') aufweisen, die sich in Längserstreckung der äußeren Bereiche der Lagerbohrungen (13, 14, 113, 114) erstrecken.

6. Gelenkgabel nach einem der vorangehenden Ansprüche,
**dadurch gekennzeichnet,**
**dass** die Gelenkgabel (7, 107) einen Basisabschnitt (10, 110) aufweist, von dem die Gabelarme (11, 12, 111, 112) parallel zueinander vorstehen, und dass die Gelenkgabel (7, 107) jeweils zwischen der Lagerachse (Y) und dem Basisabschnitt (10, 110) eine dritte Ausnehmung (136, 136') aufweist, die zumindest teilweise um die Lagerachse (Y) verläuft.

7. Kreuzgelenk (2) mit einer Gelenkgabel (7, 107) nach einem der vorangehenden Ansprüche,
**dadurch gekennzeichnet,**
**dass** die Gelenkgabel (7, 107) über ein Zapfenkreuz (30) mit einer weiteren Gelenkgabel (5) gelenkig verbunden ist.

8. Kreuzgelenk nach Anspruch 7,
**dadurch gekennzeichnet,**
**dass** die weitere Gelenkgabel (5) eine Gelenkgabel gemäß einer der Ansprüche 1 bis 8 ist.
